Europäisches Patentamt

European Patent Office

Office européen des brevets

Publication number: **0 324 994**
**A1**

# EUROPEAN PATENT APPLICATION

Application number: 88202818.6

Date of filing: 08.12.88

Int. Cl.⁴ **A22C 17/04**

Priority: 19.01.88 NL 8800120

Date of publication of application:
26.07.89 Bulletin 89/30

Designated Contracting States:
AT BE CH DE ES FR GB GR IT LI LU NL SE

Applicant: **STORK PROTECON B.V.**
**Industrielaan 63**
**NL-5940 AG Oss(NL)**

Inventor: **Van Bergen, Theodorus Maria**
**Burg. van de Elzenlaan 27**
**NL-5348 JN Oss(NL)**

Representative: **Baarslag, Aldert D. et al**
**Nederlandsch Octrooibureau**
**Scheveningseweg 82 P.O. Box 29720**
**NL-2502 LS 's-Gravenhage(NL)**

Device and process for boning meat.

In a device and process for boning meat two press elements (1,3) are moved one towards the other with meat and bone between the press surfaces thereof, so that on pressing the meat moves out sideways between the press surfaces and the bone is kept enclosed between said surfaces. One press element (1) has an upstanding part (7) along which a part (12) of the other press element (3) slides during the moving of the press elements (1,3) towards each other and this upstanding part (7) borders the space (6,10) for the meat and bone so that the meat cannot move out in the direction towards this upstanding part (7), thus making the meat pressed out more coherent. Pins (8) on one press surface (5) are slidable in holes (11) in the other press surface, said pins being positioned on the side of the bone opposite the upstanding part (7).

Fig-1

## Device and process for boning meat.

The invention relates to a device for boning meat, comprising a press with two press elements, one of which can move towards the other to press the meat with bones between their pressure faces in order to detach the meat from the bones and release it sideways from between the pressure faces, and to a process for using said device.

Such processes and devices are known, for example from Dutch Patent Application 7,707,838 and from European Patent Applications 70,605 and 244,032.

Although such devices can work well, a disadvantage is that the meat comes away in several (two or more) separate pieces, since during pressing it is pressed away at all sides or at least in two opposite directions at right angles to the direction of pressing, and it thus loses it cohesion to a substantial extent. The usefulness of the meat, particularly if it is in smaller pieces, such as meat from chicken legs, is greater and more universal if the pieces of meat obtained are as large as possible and exhibit the best possible cohesion.

The object of the invention is therefore to make an improvement in this respect, and for this purpose a device of the type referred to in the preamble is according to the invention characterized in that the press elements have parts sliding along each other with generating lines in the direction of pressing, that each of them is fitted with a pressure face projecting essentially transversely from said parts, said pressure faces approaching each other when the parts sliding along each other are pushed further along each other in the direction of pressing, so that said sliding parts and said pressure face are essentially an L shape in a plane through the direction of pressing, and the transition from said pressure faces to said sliding parts in a plane perpendicular to the direction of pressing is roughly adapted to the shape of one side of a bone in the meat to be pressed, while at the other side of said bone said pressure faces end freely, i.e. without elevation projecting in the direction of pressing, in order to press away meat from the bone only to that side.

The meat is prevented here from leaving the area between the pressure faces in the direction of the parts sliding along each other, so that it is pressed away essentially only in the opposite direction and can thereby essentially retain its cohesion.

One or more pins preferably extend in the direction of pressing, being fitted on the pressure face of one of the pressure elements on the other side of the place for the bone from where the part sliding past the other pressure element is located, and more particularly being fitted preferably on the press element whose sliding part forms an angle of approximately 90°, measured in the air, with the pressure face (instead of an angle of approximately 270° which then has to apply to the other pressure face).

There then arises between pins and sliding part of the same press element with the pressure face thereof a U-shape, in which the meat can be inserted on the pin(s) in such a way that the bone lies therein between the legs of said U. This insertion can occur in such a way that the meat has at most a few local indentations by the pin(s), but comes away in one piece.

A process for boning meat using such a device is characterized in that the meat is placed on the press element of which the part sliding along a part of the other press element projects relative to the pressure face towards the other press element. That press element is therefore placed in the press station at the bottom. If one or more pins of the above type are used, said process is preferably carried out in such a way that the meat is hooked on the pins with the bone on the side of the pins facing the parts sliding along each other, the bone and the meat directly surrounding the bone remaining a distance away from the pressure face in the direction of pressing. This means that the pins need not extend all the way through the meat, and will thus cause less damage to the piece of meat being released.

The invention also relates to a further development of these features as regards a practical and simple design, particularly suitable for the specified purposes.

The invention will now be explained in greater detail with reference to the appended drawings, showing a preferred embodiment of a device according to the invention.

In the drawings:

Fig. 1 shows a perspective view of the two mating press elements of a device according to the invention, with the top press element slightly tilted in order to show the shape of the bottom face;

Fig. 2 shows a vertical section through said elements when the press is open; and

Fig. 3 shows the same section as Fig. 2 when the press is closed, but before the end of the press stroke.

The press itself is not shown, but can be of a design which is known per se, for example as disclosed in European Patent Application 70,605, thus with a fixed lower table and an upper die which moves up and down relative thereto. Resting on the lower table is a lower press element 1, which can be confined between raised edges (not shown) of the table and can be retained by the upward and inward receding edges 2, above which parts of said raised edges of the table which are adapted in shape engage.

An upper press element 3 is fixed in the vertically moving upper die of the press, for example with screws (not shown) through holes therein, the upright outer walls being confined between downward-extending edge parts on said die, and said die being able to transmit the pressure force via the upper face 4 to said press element.

The press element 1 and 3 are preferably made of fairly hard material, possibly steel, but it is better to use a hard elastic plastic such as polyurethane or another rigid plastic or synthetic rubber, for example with a hardness of between 60° and 100° Shore, preferably about 90° Shore.

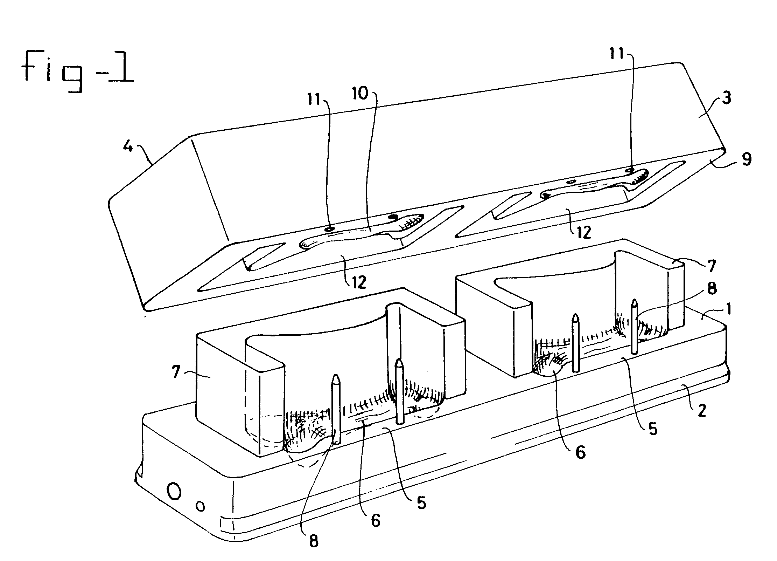

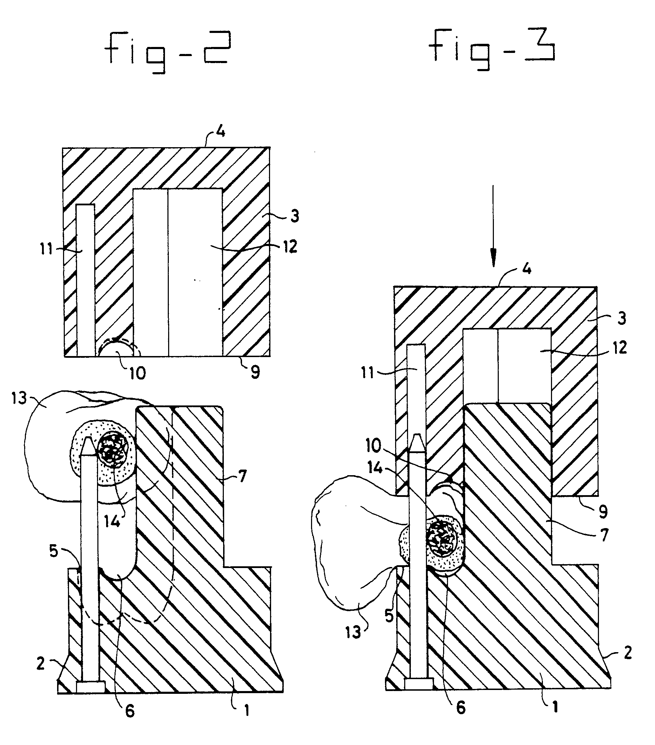

The lower press element 1 has two essentially horizontal pressure faces 5 next to each other, each for taking a bone with meat, in this case the idea being a simple chicken leg, thus with a single bone, namely a relatively long thigh bone. Each pressure face has a recess 6 to accommodate said bone at the end of the pressing operation, and thus having a shape which is adapted thereto as well as possible. Along three sides each pressure face 5 is bounded by an elevation 7, formed entirely by vertical generating lines. The elevation 7 is U-shaped, with the bottom longer than the legs and is adapted in such a way to the shape of bone and meat that the latter can be confined between it essentially on three sides. The fourth side, the long front side in Fig. 1 and left side in Fig. 2 and Fig. 3, is free and is only provided with two steel upright pins 8 with fairly sharp points.

The upper press element 3 has a flat bottom face 9, part of which forms the pressure face which is provided with two recesses 10, adapted to the shape of the bone, and during the pressing each able together with the matching recess 6 in the lower pressure face 5 to confine said bone with as little free space as possible left round it. Size and shape deviations between individual bones can be compensated for here by the fact that the press elements have some elasticity and thus with a sufficiently close-fitting design can adapt thereto, particularly in and near the end press position.

Said press element 3 also has two sets of two apertures 11 to take the pins 8 during pressing, and two U-shaped recesses 12 for each taking an elevation 7 of the lower press element 1 in a sliding fit.

When the press is open (Figs. 1 and 2) a piece of meat 13 with bone 14, for example a chicken leg, is hooked on the pins 8 in the U-shaped space of one of the elevations 7 in such a way that the bone lies between the pins 8 and the elevation 7 and no further than necessary to ensure that the bone remains securely in said space, thus not all the way through the meat.

When both press spaces are thus filled, the upper press element 3 is moved downwards. The bone 14 now moves downwards in the said space, and the meat is pressed away to one side (the front side in Fig. 1 and the lefthand side in Figs. 2 and 3). A part of the meat is already to the left of the pins 8, shown in Figs. 2 and 3, on closing of the press another part moves over the top of the pins 8 to the left in those figures, and another part flows round the pins to the left, so that the pins do make an indentation in the meat over part of the width of the meat, but the meat remains together and is pressed away from between the pressure faces in one piece. When the position shown in Fig. 3 is reached, this pressing is continued until the horizontal parts of the pressure faces 5 and 9 join each other, the bone is confined between the recesses 6 and 10, and the meat has left the press space to the left in one piece. Any sinews or ligaments still connecting the meat to the bone can be removed by a cutting device (not shown), for example by a knife which is moved along the vertical lefthand wall of the press elements past the press gap, as in principle known per se.

The shape of the press elements can, of course, be adapted to the shape of the pieces of meat with bone which one wishes to process in this way, even if they are more complicated than a chicken leg and, for example, contain more than one bone.

## Claims

1. Device for boning meat, comprising a press with two press elements, one of which can move towards the other to press the meat with bones between their pressure faces in order to detach the meat from the bones and release it sideways from between the pressure faces, characterized in that the press elements have parts sliding along each other with generating lines in the direction of pressing, that each of them is fitted with a pressure face projecting essentially transversely from said parts, said pressure faces approaching each other when the parts sliding along each other are pushed further along each other in the direction of pressing, so that said sliding parts and said pressure face are essentially an L shape in a plane through the direction of pressing, and the transition from said pressure faces to said sliding parts in a plane perpendicular to the direction of pressing is roughly adapted to the shape of one side of a bone in the meat to be pressed, while at the other side of said bone said pressure faces end freely, i.e. without elevation projecting in the direction of pressing, in order to press away meat from the bone only to that side.

2. Device according to Claim 1, in which one or more pins are fitted on the pressure face of one of the press elements, extending in the direction of pressing parallel to the generating lines, on the other side of the place for the bone on the pressure face.

3. Device according to Claim 2, in which said pins with the part of the press element to which they are attached and which slides past the other press element form a U-shape in which the meat can be pushed on the pins in such a way that the bone lies therein between the legs of said U.

4. Device according to Claim 2 or 3, in which the other press element has one or more apertures in the pressure face to accommodate the pins in sliding fashion therein during pressing.

5. Device according to any of the preceding claims, in which the parts sliding along each other comprise a plunger part on one press element and a cylindrical part on the other press element, the latter guiding the former over virtually the entire periphery in sliding fashion.

6. Device according to any of the preceding claims, in which the parts sliding along each other in a plane perpendicular to the direction of pressing are essentially a U-shape, with longer bottom than upright legs, so that the meat is confined on three sides, viewed in that plane.

7. Device according to any of the preceding claims, in which a recess, in shape corresponding essentially to the shape of the bone, is provided in one or both pressure faces.

8. Process for boning meat, in particular pieces of meat with a single elongated bone, in a device according to any of the preceding claims, characterized in that the meat is placed on the press element of which the part sliding past a part of the other press element projects relative to the pressure face towards the other press element.

9. Process according to Claim 8 for boning meat in a device according to any of Claims 2, 3 or 4, in which the meat is hooked on the pins with the bone on the side of the pins which faces the parts sliding along each other, the bone and the meat directly surrounding the bone remaining a distance away from the pressure face in the direction of pressing.

Fig-1

fig-2

fig-3

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,A | EP-A-0 244 032 (STORK PROTECON)<br>* Column 3, line 37 - column 4, line 40; column 4, line 50 - column 5, line 24 *<br>--- | 1,2,4,7,9 | A 22 C 17/04 |
| A | EP-A-0 086 020 (LANGEN RESEARCH)<br>--- | | |
| A | EP-A-0 133 332 (LANGEN RESEARCH)<br>--- | | |
| D,A | EP-A-0 070 605 (PROTECON)<br>----- | | |
| | | | TECHNICAL FIELDS SEARCHED (Int. Cl.4)<br><br>A 22 C |

The present search report has been drawn up for all claims

| Place of search | Date of completion of the search | Examiner |
|---|---|---|
| THE HAGUE | 14-03-1989 | DE LAMEILLIEURE D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ....................................................................
& : member of the same patent family, corresponding
    document

EPO FORM 1503 03.82 (P0401)